# EUROPÄISCHE PATENTSCHRIFT

(11) **EP 0 482 307 B1**
(45) Veröffentlichungstag und Bekanntmachung des Hinweises auf die Patenterteilung: **22.03.1995**
(21) Anmeldenummer: 91113548.1
(22) Anmeldetag: 13.08.1991
(51) Int. Cl.: B01D 46/12, B01D 53/92, F01N 3/02

(54) **Filter**
Filter
Filtre

(30) Priorität: 20.09.1990 DE 4029749
(43) Veröffentlichungstag der Anmeldung: 29.04.1992
(73) Patentinhaber: Schwäbische Hüttenwerke Gesellschaft mit beschränkter Haftung, D-73414 Aalen (DE)
(72) Erfinder: Härle, Hans A., Dipl.-Ing., W-7085 Bopfingen (DE)
(74) Vertreter: Lorenz, Werner, Dipl.-Ing.

(56) Entgegenhaltungen:
- EP-A- 0 331 885
- EP-A- 0 428 037
- WO-A-81/02686
- DE-A- 3 504 694
- DE-A- 3 712 872
- DE-A- 3 815 148

## Beschreibung

Die Erfindung betrifft einen Filter nach der im Oberbegriff von Anspruch 1 näher definierten Art.

Aus der EP-A-0 331 885 und der EP-A-0 428 037 sind bereits Filter bekannt, die aus einer Vielzahl von formgepreßten, hochtemperaturbeständigen und gesinterten Filterplatten bestehen. Die Filterplatten werden dabei in Achslängsrichtung von den Abgasen durchströmt.

In der WO-A-81 02 686 ist ein Filter zum Abscheiden von Verunreinigungen aus Abgasen, insbesondere aus Abgasen von Verbrennungsmotoren, bekannt. Der Filter weist einen Filterkörper auf, der aus einer Vielzahl von formgepreßten hochtemperaturbeständigen Filterplatten aus Metallfasern besteht. Diese Filterplatten sind als einen freien zentralen Innenraum aufweisende Filterscheiben ausgebildet, so daß die Abgase des Verbrennungsmotors von innen nach außen strömen können.

In der DE-A 35 04 694 ist ein Abgasfilter für Verbrennungsmotoren dargestellt, wobei einzelne Ringscheiben mit spiralförmigen Strömungskanälen zu einem Einbaukörper zusammengefügt sind.

Der vorliegenden Erfindung liegt die Aufgabe zugrunde, Filter der eingangs erwähnten Art weiter zu verbessern bzw. auszugestalten. Insbesondere soll eine noch bessere Anpassung an örtliche Gegebenheiten und ein gutes Strömungsverhalten möglich sein.

Erfindungsgemäß wird diese Aufgabe durch die im kennzeichnenden Teil von Anspruch 1 genannten Merkmale gelöst.

Erfindungsgemäß durchströmen nunmehr die Abgase die Filterscheiben radial, und zwar entweder von außen nach innen oder von innen nach außen.

Auf diese Weise kann der Filter z.B. - in Abhängigkeit von den örtlichen Gegebenheiten - gegebenenfalls noch näher an dem Motor angeordnet werden, wodurch es zu einer geringeren Abkühlung der zu reinigenden Abgase kommt. Aufgrund der dadurch in dem Filterkörper herrschenden höheren Temperatur läßt sich z.B. eine bessere Rußkonversion und eine bessere katalytische Wirkung erreichen.

Ein weiterer Vorteil der erfindungsgemäßen Filterform liegt auch darin, daß der Filterkörper bausteinartig je nach gewünschter Größe verlängerbar ist.

Durch das Einmünden wenigstens eines Zulaufkanales in den Zwischenraum zwischen dem Filtergehäuse und den Umfangswänden der Filterscheiben und die Ausführung des zentralen Innenraumes als Abgaskanal läßt sich der erfindungsgemäße Filter sehr nahe am Motor anordnen, denn der Zulaufkanal kann gegebenenfalls direkt oder über kurze Rohrkrümmer mit den Zylinderauslässen in Verbindung stehen.

Durch die leitschaufelartige Ausgestaltung der Abstandshalter, die in radialer Richtung gekrümmt sind, und die Neigung des Zulaufkanals gegen die radiale Richtung wird ein besseres Strömungsverhalten in dem Filter erreicht, was sich positiv auf die Filter- und Motorleistung auswirkt.

In Weiterbildung der Erfindung kann vorgesehen sein, daß die Abstandshalter durch in die Filterscheiben eingeformte Rippen, Sicken o.dgl. gebildet sind.

Die Rippen und Sicken können dabei gleichzeitig auch eine Leitfunktion für die Abgasstromrichtung übernehmen.

In einer Ausgestaltung hierzu kann vorgesehen sein, daß die Filterscheiben wellenartig ausgebildet sind und die Wellenberge und Wellentäler die Abstandshalter der übereinander liegenden Filterscheiben bilden.

In Weiterbildung der Erfindung kann vorgesehen sein, daß der Zulaufkanal tangential in das Filtergehäuse mündet, so daß das Strömungsverhalten in dem Filter verbessert wird.

Eine konstruktiv einfache und damit insbesondere für die Serienfertigung geeignete Form für die Filterscheiben ist gegeben, wenn diese diskusartig ausgebildet sind.

Aufgrund der Herstellungsart der Filterscheiben als formgepreßte und gesinterte Körper lassen sich jedoch im Bedarfsfalle auch beliebig geformte und damit noch besser an die örtlichen Gegebenenheiten angepaßte Filterscheibenformen herstellen. So können z.B. ovale oder ellipsoide Formen vorgesehen werden.

Ebenso ist es auch möglich, zur Platzeinsparung und/oder zur Erhöhung des Filterwirkungsgrades zwei oder mehrere Pakete von Filterscheiben nebeneinander in einem gemeinsamen Filtergehäuse anzuordnen. Dabei kann die Form der Filterscheiben auch von einer kreisrunden, ovalen oder ellipsoiden Form abweichen und - in Abhängigkeit von den örtlichen Gegebenheiten - entsprechend beliebig geformt werden.

Die Verbindung der einzelnen übereinander angeordneten Filterscheiben zu einem einheitlichen Filterkörper kann auf verschiedene Weise erfolgen. So können z.B. die Filterscheiben formgepreßt und anschließend in einem gemeinsamen Sintervorgang zusammengesintert werden oder die formgepreßten und gesinterten Filterscheiben werden zusammengeschweißt oder durch mechanische Verbindungsglieder miteinander verbunden.

Die mechanischen Verbindungsglieder können z.B. Klammern sein, wie sie in der EP-A-0 428 037 beschrieben sind.

Ebenso können die Innen- und Außenränder der Filterscheiben abwechselnd mit Falzen versehen sein, die entsprechend umgebogen jeweils für eine Verbindung benachbart zueinander liegenden Filterscheiben sorgen.

In Weiterbildung der Erfindung kann vorgesehen sein, daß in den Ausgangskanälen Katalysatorplatten angeordnet sind oder daß die Filterwände in den Ausgangskanälen mit katalytisch wirkenden Werkstoffen beschichtet sind.

Durch diese Ausgestaltung können nach einer Rußumwandlung in den Filterwänden von den so gereinigten Abgasen auch noch weitere schädliche Bestandteile, wie z.B. Kohlenmonoxyd und Kohlenwasserstoff, aus den Abgasen entfernt werden.

In Weiterbildung der Erfindung kann hierzu auch vorgesehen sein, daß die Filterscheiben auf der Seite der Eingangskanäle mit katalytisch wirkenden Werkstoffen zur Erniedrigung der Rußkonversionstemperatur beschichtet sind.

Als katalytisch wirkende Werkstoffe kann man z.B. hierfür Mangan, Molybdän o.dgl. verwenden, durch die die Rußkonversionstemperatur reduziert wird, womit der Wirkungsgrad des Filters entsprechend höher wird.

Nachfolgend ist ein Ausführungsbeispiel der Erfindung anhand der Zeichnung prinzipmäß beschrieben.

Es zeigt:
- Fig. 1: einen Schnitt in vergrößertem Maßstab durch mehrere Filterscheiben,
- Fig. 2: eine Draufsicht auf eine Filterscheibe mit dem Filtergehäuse.

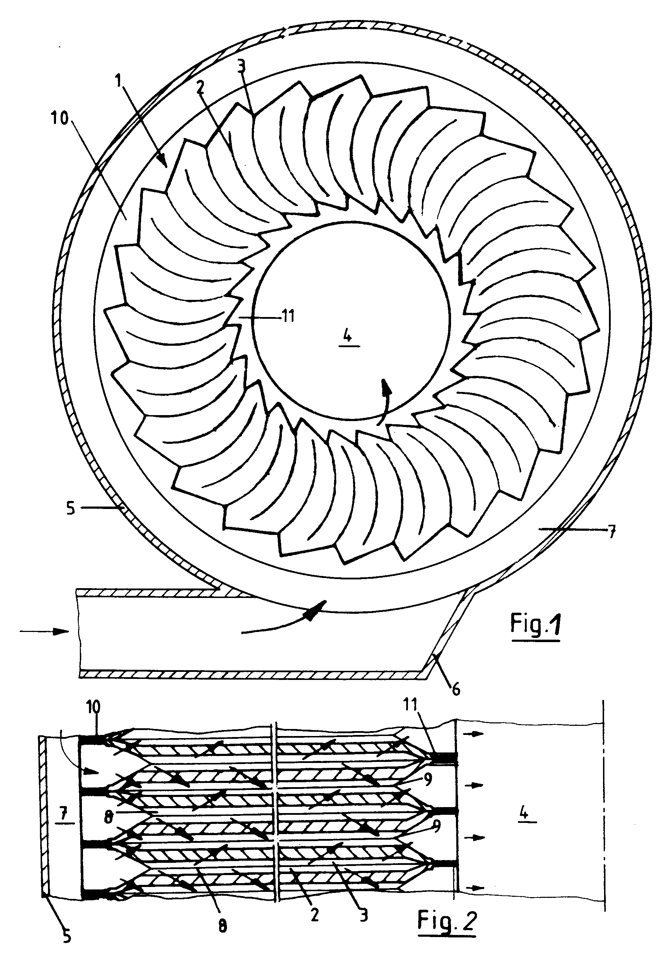

Der erfindungsgemäße Filterkörper besteht aus einer Vielzahl von übereinander angeordneten einzelnen Filterscheiben 1, die z.B. durch Schweißen, einem Sintervorgang oder durch mechanische Verbindungsglieder miteinander zu einer Einheit verbunden sind. (siehe Fig. 1). Hierzu können z.B. die flach aufeinander liegenden Außen- und Innenränder 10 bzw. 11 der Filterscheiben dienen. Die Oberfläche jeder Filterscheibe 1 ist wellenartig mit aufeinander folgenden Rippen 2 und Sicken 3 versehen. Jede Filterscheibe 1 besitzt einen freien zentralen Innenraum 4, der als koaxiale Bohrung ausgebildet ist.

Die in einer gewünschten Anzahl zusammengefügten, übereinander angeordneten Filterscheiben 1 sind in einem Filtergehäuse 5 angeordnet, das mit einem Zulaufkanal 6 versehen ist (siehe Fig. 2). Der Zulaufkanal 6 kann radial, schräg oder - wie in der Fig. 2 dargestellt - tangential in einen Zwischenraum 7 zwischen den äußeren Umfangswänden der Filterscheiben 1 und der Innenwand des Filtergehäuses 5 einmünden.

Wie aus der Fig. 1 ersichtlich ist, werden durch die Abstandshalter darstellende Rippen 2 und Sicken 3 die übereinander liegenden Filterscheiben 1 derart auf Abstand voneinander gehalten, daß sich Eingangskanäle 8 und Ausgangskanäle 9 ergeben. Hierzu werden die übereinander liegenden Filterscheiben 1 jeweils spiegelbildlich aufeinander gesetzt. Die in den Zwischenraum 7 einströmenden Abgase durchströmen dann in Pfeilrichtung aufgrund der Porosität die zwischen den Eingangs- und Ausgangskanälen 8 bzw. 9 liegenden Filterwände, wobei die Rußkonversion bzw. Rußverbrennung stattfindet.

Dabei ist lediglich dafür zu sorgen, daß die Filterwände eine entsprechend große Porosität besitzen. Hierzu wird man die formgepreßten und gesinterten Filterplatten im allgemeinen aus grobkörnigen oder noch besser, späneartigen oder faserartigen Metallfäden oder einem Gemisch daraus herstellen. So können z.B. aus endlichen oder endlosen Metallspänen oder Metallfasern gebildete Fasermatten oder Fasergeflechte hierfür verwendet werden.

Bei dem dargestellten Ausführungsbeispiel, bei dem die Abgase radial von außen nach innen durch die Filterscheiben strömen, bildet der freie Innenraum 4 den Abgaskanal.

Bei dem Ausführungsbeispiel nach der Fig. 2 sind die Rippen 2 und Sicken 3 gegen die radiale Richtung leitschaufelartig gekrümmt, womit sich in Verbindung mit dem tangentialen Zulaufkanal ein sehr gutes Strömungsverhalten ergibt.

Bei dem Ausführungsbeispiel nach der Fig. 2 sind die Filterscheiben 1 diskusartig in kreisrunder Form ausgeführt.

Im Bedarfsfalle können die den Ausgangskanälen 9 zugewandten Filterwände der Filterscheiben 1 mit einem katalytisch wirkenden Werkstoff beschichtet werden. Verwendet man hierzu z.B. Platin, Vanadium, Rhodium o.dgl., so können nach einer Abscheidung bzw. Rußumwandlung in den Filterwänden problemlos auch noch Kohlenmonoxyd, Kohlenwasserstoffe und Stickstoffe abgeschieden werden.

Statt einer Beschichtung der Filterwände können (nicht dargestellt) zwischen an die aneinander stoßenden Rippen 2 und Sicken 3 von benachbart zueinander liegenden Filterscheiben auch Katalysatorplatten eingelegt werden, an deren Oberflächen die Abgase auf ihrem Weg zum Innenraum 4 entlang strömen.

## Patentansprüche

1. Filter zum Abscheiden von Verunreinigungen aus Abgasen, insbesondere aus den Abgasen eines Verbrennungsmotores, mit einem Filterkörper, der aus einer Vielzahl von formgepreßten hochtemperaturbeständigen und gesinterten Filterplatten aus Metallpulver, Metallspänen, Metallfasern oder einem Gemisch daraus besteht, die über- bzw. hintereinander angeordnet und durch Abstandshalter (2,3) auf Abstand voneinander gehalten eine Vielzahl von Strömungskanälen zwischen sich bilden, wobei die Strömungskanäle zur Bildung von Eingangs- und Ausgangskanälen (8 bzw. 9) jeweils auf einer Seite offen und auf der anderen Seite geschlossen sind, wobei die zwischen den Eingangs- und Ausgangskanälen (8 bzw. 9) liegenden Wände der Filterplatten Filterflächen darstellen, und wobei die Filterplatten in einem Filtergehäuse (5) angeordnet sind,
**dadurch gekennzeichnet,** daß die Filterplatten als Filterscheiben (1) mit einem freien zentralen Innenraum (4) ausgebildet sind, die von außen nach innen oder von innen nach außen von den Abgasen durchströmt sind und daß die Abstandshalter (2,3) leitschaufelartig in radialer Richtung gekrümmt sind und der Zulaufkanal (6) gegen die radiale Richtung geneigt in das Filtergehäuse (5) mündet.

2. Filter nach Anspruch 1,
**dadurch gekennzeichnet**, daß die Abstandshalter durch in die Filterscheiben (1) eingeformte Rippen (2), Sicken (3) o.dgl. gebildet sind.

3. Filter nach Anspruch 1,
**dadurch gekennzeichnet**, daß die Filterscheiben (1), wellenartig ausgebildet sind und die Wellenberge und Wellentäler die Abstandshalter der übereinander liegenden Filterscheiben bilden.

4. Filter nach Anspruch 1, 2 oder 3,
**dadurch gekennzeichnet**, daß der Zulaufkanal (6) tangential in das Filtergehäuse (5) mündet.

5. Filter nach einem der Ansprüche 1 bis 4,
**dadurch gekennzeichnet**, daß die Filterscheiben (1) diskusartig ausgebildet sind.

6. Filter nach einem der Ansprüche 1 bis 5,
**dadurch gekennzeichnet**, daß zwei oder mehrere Pakete von Filterscheiben (1) nebeneinander in einem gemeinsamen Filtergehäuse (5) angeordnet sind.

7. Filter nach einem der Ansprüche 1 bis 6,
**dadurch gekennzeichnet**, daß die formgepreßten Filterscheiben (1) gemeinsam in einem Sintervorgang zu einem einheitlichen Filterkörper zusammengesintert oder durch Schweißen zu einem einheitlichen Filterkörper miteinander verbunden sind.

8. Filter nach einem der Ansprüche 1 bis 7,
**dadurch gekennzeichnet**, daß die formgepreßten und gesinterten Filterscheiben (1) durch mechanische Verbindungsglieder zu einem einheitlichen Filterkörper miteinander verbunden sind.

9. Filter nach einem der Ansprüche 1 bis 8,
**dadurch gekennzeichnet,** daß in den Ausgangskanälen (9) Katalysatorplatten angeordnet sind oder daß die Filterwände in den Ausgangskanälen (9) mit katalytisch wirkenden Werkstoffen beschichtet sind und/oder daß die Filterscheiben (1) auf der Seite der Eingangskanäle (8) mit katalytisch wirkenden Werkstoffen zur Erniedrigung der Rußkonversionstemperatur beschichtet sind.

## Claims

1. Filter for removing contaminants from waste gases, in particular from the exhaust gases of an internal combustion engine, having a filter body which comprises a multiplicity of pressure-moulded high-temperature-resistant and sintered filter plates of metal powder, metal chips, metal fibres or a mixture thereof, which are arranged above or behind one another and, being kept at a distance from one another by spacers (2, 3), form a multiplicity of flow channels between one another, with the flow channels for forming inlet and outlet channels (8 and 9 respectively) each being open on one side and closed on the other side, with the walls of the filter plates lying between the inlet and outlet channels (8 and 9 respectively) forming filter surfaces, and with the filter plates being arranged in a filter housing (5), characterized in that the filter plates are configured as filter discs (1) having a free central interior space (4), which discs have the waste gases flowing through them from the outside to the inside or from the inside to the outside, and in that the spacers (2, 3) are curved in the manner of guide vanes in a radial direction and the supply channel (6) opens into the filter housing (5) in a direction inclined to the radial direction.

2. Filter according to Claim 1, characterized in that the spacers are formed by ribs (2), beading (3) or the like moulded into the filter discs (1).

3. Filter according to Claim 1, characterized in that the filter discs (1) have a corrugated configuration and the peaks and troughs of the corrugation form the spacers of the superposed filter discs.

4. Filter according to Claim 1, 2 or 3, characterized in that the supply channel (6) opens into the filter housing (5) in a tangential direction.

5. Filter according to any one of Claims 1 to 4, characterized in that the filter discs (1) have a discus-like configuration.

6. Filter according to any one of Claims 1 to 5, characterized in that two or more packs of filter discs (1) are arranged beside one another in a common filter housing (5).

7. Filter according to any one of Claims 1 to 6, characterized in that the pressure-moulded filter discs (1) are jointly sintered together in a sintering process to form an integral filter body or are connected to one another by welding to form an integral filter body.

8. Filter according to any one of Claims 1 to 7, characterized in that the pressure-moulded and sintered filter discs (1) are connected to one another by mechanical connectors to form an integral filter body.

9. Filter according to any one of Claims 1 to 8, characterized in that catalyst plates are arranged in the outlet channels (9) or in that the filter walls in the outlet channels (9) are coated with catalytically active materials and/or in that the filter discs (1) are coated on the side of the inlet channels (8) with catalytically active materials to lower the soot conversion temperature.

## Revendications

1. Filtre pour séparer des impuretés de gaz d'échappement, notamment de gaz d'échappement d'un moteur à combustion interne, comportant un corps filtrant qui se compose d'une pluralité de plaques filtrantes réfractaires moulées à la presse et frittées à partir de poudre métallique, de copeaux métalliques, de fibres métalliques ou d'un mélange de ceux-ci, les plaques filtrantes étant disposées les unes au-dessus ou derrière les autres et maintenues écartées les unes des autres par des écarteurs (2, 3) pour former entre elles une pluralité de canaux d'écoulement, où lesdits canaux sont respectivement ouverts d'un côté et fermés de l'autre côté pour former des canaux d'entrée et des canaux de sortie (8, 9), où les parois des plaques filtrantes, qui se trouvent entre les canaux d'entrée et les canaux de sortie (8, 9), constituent des surfaces filtrantes, et où les plaques filtrantes sont disposées dans un carter de filtre (5), **caractérisé** en ce que les plaques filtrantes sont conformées en plaques annulaires filtrantes (1) qui présentent une zone intérieure centrale libre (4) et sont traversées par les gaz de l'extérieur à l'intérieur ou de l'intérieur à l'extérieur, en ce que les écarteurs (2, 3) sont incurvés en direction radiale à la manière d' aubes directrices, et en ce que le canal d'amenée (6) débouche dans le carter de filtre (5) avec une inclinaison par rapport à la direction radiale.

2. Filtre selon la revendication 1, **caractérisé** en ce que les écarteurs sont formés par des nervures (2), des moulures (3) ou des formes analogues ménagées sur les plaques filtrantes (1).

3. Filtre selon la revendication 1, **caractérisé** en ce que les plaques filtrantes (1) ont une configuration ondulée et en ce que les crêtes et les creux des ondulations constituent les écarteurs des plaques filtrantes superposées.

4. Filtre selon la revendication 1, 2 ou 3, **caractérisé** en ce que le canal d'amenée (6) débouche tangentiellement dans le carter de filtre (5).

5. Filtre selon l'une des revendications 1 à 4, **caractérisé** en ce que les plaques filtrantes (1) sont en forme de disque.

6. Filtre selon l'une des revendications 1 à 5 **caractérisé** en ce que deux ou plusieurs paquets de plaques filtrantes (1) sont juxtaposés dans un carter de filtre commun (5).

7. Filtre selon l'une des revendications 1 à 6, **caractérisé** en ce que les plaques filtrantes (1) moulées à la presse sont frittées ensemble dans un processus de frittage pour former un corps filtrant unitaire ou sont fixées les unes aux autres par soudage pour former un corps filtrant unitaire.

8. Filtre selon l'une des revendications 1 à 7, **caractérisé** en ce que les plaques filtrantes (1) moulées à la presse et frittées sont fixées les unes aux autres par des éléments mécaniques de fixation pour former un corps filtrant unitaire.

9. Filtre selon l'une des revendications 1 à 8, **caractérisé** en ce que des plaques à catalyseur sont disposées dans les canaux de sortie (9), ou en ce que les parois filtrantes sont revêtues de matières à effet catalytique dans les canaux de sortie (9) et/ou en ce que les plaques filtrantes (1) sont revêtues de matières à effet catalytique du côté des canaux d'entrée (8) pour abaisser la température de conversion de la suie.
